# EUROPEAN PATENT SPECIFICATION

(11) **EP 2 371 901 B1**
(45) Date of publication and mention of the grant of the patent: **04.09.2013**
(21) Application number: 11158651.7
(22) Date of filing: 17.03.2011
(51) Int. Cl.: C08L 59/00, C08K 5/09, C08K 3/00, C08K 5/00

(54) **Durable polyoxymethylene composition**
Langlebige Polyoxymethylenzusammensetzung
Composition de polyoxyméthylène durable

(30) Priority: 29.03.2010 US 318784 P
(43) Date of publication of application: 05.10.2011
(73) Proprietor: MIN AIK Technology Co., Ltd., Tao Yuan Hsien 333 (TW)
(72) Inventor: Chang, Jung-Pao, 830, Kaohsiung City (TW); Lin, Chi-En, 333, Taoyuan County (TW)
(74) Representative: Becker Kurig Straus

(56) References cited:
- US-A- 5 405 689
- US-A- 5 641 824
- US-A- 6 147 146
- US-A1- 2003 171 470
- US-A1- 2005 088 782

## Description

This invention relates to a durable polyoxymethylene composition and a ramp including a durable polyoxymethylene composition capable of excellent micro-wear-resistant property under a high humidity and high temperature condition, or under a low humidity and low temperature condition, according to the pre-characterizing clauses of claims 1 and 14, respectively.

In the technical field of engineering resins, a polyoxymethylene resin is widely used due to its well-balanced mechanical properties, remarkable chemical resistance and sliding properties as well as the good friction wear performance. Recently, attempts have been made to use such polyoxymethylene resin as material for a ramp in a hard disk drive. For example, US 2008/0037175 discloses a ramp including a polyoxymethylene resin and a colorant for a hard disk drive. The ramp has an outgas level of 20 µg/g or less. U.S. Patent 7088555 discloses a ramp having a surface hardness of 2.6 GPa or more.

However, in the aforementioned conventional technologies, no description is yet made to a polyoxymethylene resin with excellent micro-wear-resistant properties, and further, no proposal for attempting to reduce wear debris from a polyoxymethylene resin ramp is found.

This in mind, the invention aims at providing a polyoxymethylene resin with the properties of micro-wear resistance, high mechanical stability and high mouldability. The function of micro-wear resistance is to decrease the amount of energy necessary for loading/unloading, and also reduces the amount of debris caused when the lift feature of suspension arm rubs against the ramp surface.

This is achieved by a durable polyoxymethylene composition and a ramp, according to claims 1 and 14, respectively.

The dependent claims pertain to corresponding further developments and improvements.

As will be seen more clearly from the detailed description below, the present invention in one aspect provides a durable polyoxymethylene composition. The durable polyoxymethylene composition of the present invention has excellent micro-wear-resistant property. The polyoxymethylene composition of the present invention in one aspect exhibits the micro-wear loss less than 10 µm² wear area, or exhibits the micro-wear loss of 1 µm maximum wear depth under a condition of a load of 2.5 g, reciprocated 600,000 times, at a speed of 8 inch/sec and a low environmental humidity and a low environmental temperature.

The present invention in another aspect provides a durable polyoxymethylene composition. The durable polyoxymethylene composition of the present invention has excellent micro-wear-resistant property. The polyoxymethylene composition of the present invention in another aspect exhibits the micro-wear loss less than 10 µm² wear area or exhibits the micro-wear loss of 1 µm maximum wear depth under a condition of a load of 2.5 g, reciprocated 600,000 times, at a speed of 8 inch/sec and a high environmental humidity and a high environmental temperature.

The present invention in another aspect provides a ramp including a durable polyoxymethylene composition. The ramp of the present invention may exhibit the micro-wear loss less than 10 µm² wear area or exhibit the micro-wear loss of 1 µm maximum wear depth under a condition of a load of 2.5 g, reciprocated 600,000 times, at a speed of 8 inch/sec and a low environmental humidity and a low environmental temperature.

The present invention in another aspect provides a ramp including a durable polyoxymethylene composition. The ramp of the present invention may exhibit the micro-wear loss less than 10 µm² wear area or exhibit the micro-wear loss of 1 µm maximum wear depth under a condition of a load of 2.5 g, reciprocated 600,000 times, at a speed of 8 inch/sec and a high environmental humidity and a high environmental temperature.

In one embodiment of the present invention, the condition of high humidity has a relative humidity in a range from 50% to 60%.

In another embodiment of the present invention, the condition of low humidity has a relative humidity in a range from 13% to 17%.

In one embodiment of the present invention, the condition of high temperature has a temperature in a range from 22°C to 60°C.

In one embodiment of the present invention, the condition of low temperature has a temperature in a range from 3°C to 10°C.

The polyoxymethylene composition of the present invention includes: a polyoxymethylene copolymer of 90.5 wt% to 92.5 wt% including 3.3 wt% of 1,3-dioxolane as a comonomer; an inorganic filler of 0.5 wt% to 3.0 wt%; a lubricant of 3.0 wt% to 10.0 wt%; a nucleating agent of 1.0 wt% to 3.0 wt%; a stabilizer of 0.5 wt% to 1.0 wt%; and an anti-static agent of 0.5 wt% to 2.0 wt%.

In the polyoxymethylene composition of the present invention, the polyoxymethylene copolymer may have a tensile strength 62Mpa (ISO 527) and melt flow rate 27 g/10min (ISO 1133).

In the polyoxymethylene composition of the present invention, the lubricant may be a modified polyolefin.

In the polyoxymethylene composition of the present invention, the modified polyolefin may be a maleic anhydride modified polyolefin.

In the polyoxymethylene composition of the present invention, the inorganic filler may be nano-grade zinc oxide particles with an average particle size of 100 nm or less.

In the polyoxymethylene composition of the present invention, the nucleating agent may be at least one of a sodium salt of montanic acid and a long chain, linear carboxylic acid. For example, the nucleating agent may be Licomont Cav 102 from Clariant.

In the polyoxymethylene composition of the present invention, the stabilizer may be a mixture of IRGANOX 1010, IRGANOX 259 and IRGANOX 1098 from CIBA, MELAMINE, calcium stearate and PALMOWAX (specification EBS-SP).

In the polyoxymethylene composition of the present invention, the anti-static agent may be a glycerol monostearate.

The polyoxymethylene composition of the present invention may further include an ultra high molecular weight polyethylene of molecular weight 2 million with average particle size 30 µm in a range of 3 wt% to 10 wt%.

The polyoxymethylene composition of the present invention may further include a potassium titanate powder having an average particle size of 1.5 µm in a range of 0.5 wt% to 2.0 wt%.

The polyoxymethylene composition of the present invention may further include a calcium carbonate having a volume average particle diameter of 1 µm in a range of 0.5wt% to 2.0wt%.

The polyoxymethylene composition of the present invention may further include a nano-grade silicon dioxide with an average particle size of 20 nm in a range of 0.5 wt% to 2.0 wt%.

The polyoxymethylene composition of the present invention may further include a titanium dioxide with an average particle size of 1 µm in a range of 0.5 wt% to 2.0wt%.

The polyoxymethylene composition of the present invention may further include a stabilizer such as IRGANOX 1010, IRGANOX 259 and IRGANOX 1098 from CIBA, MELAMINE, calcium stearate and PALMOWAX (specification EBS-SP) in a range of 0.5 wt% to 1.0 wt%.

The polyoxymethylene composition of the present invention may further include a low density polyethylene with a melt flow rate 28 g/10min.

The polyoxymethylene composition of the present invention may be in a form of pellets of 2mm by 3mm dimension.

The polyoxymethylene composition of the present invention may be in a form of a hollow column.

The present invention generally relates to a durable polyoxymethylene composition as well as a load/unload ramp structure. Load/unload ramp structure is used to keep a magnetic head away from the rotating disk. A suspension arm holds a magnetic head for reading and writing of information from and to an information recording disk rotating at a high speed in a hard disk drive. In a recent hard disk drive, there is provided a ramp as a magnetic-head retraction location where the head is held as spaced from a recording disk when the disk is in its inoperable mode.

The present invention in a first aspect provides a durable polyoxymethylene composition. The durable polyoxymethylene composition of the present invention has excellent micro-wear-resistant property. The polyoxymethylene composition of the present invention in one aspect exhibits the micro-wear loss less than 10 µm² wear area or 1 µm maximum wear depth under a condition of a load of 2.5 g, reciprocated 600,000 times, at a speed of 8 inch/sec and a low environmental humidity and a low environmental temperature.

In another embodiment of the present invention, the condition of low humidity has a relative humidity in a range from 13% to 17%. In another embodiment of the present invention, the condition of low temperature has a temperature in a range from 3°C to 10°C. In one preferred embodiment of the present invention, the polyoxymethylene composition forms a ramp for use in a hard disk drive.

The present invention in another aspect provides another durable polyoxymethylene composition. The durable polyoxymethylene composition of the present invention also has excellent micro-wear-resistant property. The polyoxymethylene composition of the present invention in another aspect exhibits the micro-wear loss less than 10 µm² wear area or 1 µm maximum wear depth under a condition of a load of 2.5 g, reciprocated 600,000 times, at a speed of 8 inch/sec and a high environmental humidity and a high environmental temperature.

In one embodiment of the present invention, the condition of high humidity has a relative humidity in a range from 50% to 60%. In another embodiment of the present invention, the condition of high temperature has a temperature in a range from 22°C to 60°C. In one preferred embodiment of the present invention, the polyoxymethylene composition forms a ramp for use in a hard disk drive.

The polyoxymethylene composition of the present invention includes some components, such as a polyoxymethylene copolymer, an inorganic filler, a lubricant, a nucleating agent, a stabilizer, and an anti-static agent. The polyoxymethylene composition includes the polyoxymethylene copolymer of 90.5 wt% to 92.5 wt% including 3.3 wt% of 1,3-dioxolane as a comonomer. For example, the polyoxymethylene copolymer may have a tensile strength 62Mpa (ISO 527) and melt flow rate 27 g/10min (ISO 1133).

The polyoxymethylene composition may include a lubricant of 3.0 wt% to 10.0 wt%. For example, the lubricant may be a modified polyolefin, such as a maleic anhydride modified polyolefin. The polyoxymethylene composition of the present invention may further include a low density polyethylene with a melt flow rate 28 g/10min. In addition, the polyoxymethylene composition of the present invention may further include an ultra high molecular weight polyethylene of molecular weight 2 million with average particle size 30 µm in a range of 3 wt% to 10 wt%.

There may be various and different inorganic fillers. For example, one suitable inorganic filler may be nano-grade zinc oxide particles of 0.5 wt% to 3.0 wt% with an average particle size of 100 nm or less. The polyoxymethylene composition of the present invention may include other suitable inorganic filler (s) of different wt%, such as potassium titanate powder having an average particle size of 1.5 µm in a range of 0.5wt% to 2.0 wt%, calcium carbonate having a volume average particle diameter of 1 µm in a range of 0.5 wt% to 2.0 wt%, nano-grade silicon dioxide with an average particle size of 20 nm in a range of 0.5 wt% to 2.0 wt%, titanium dioxide with an average particle size of 1 µm in a range of 0.5 wt% to 2.0 wt%, or the combination thereof.

The polyoxymethylene composition includes the nucleating agent of 1.0 wt% to 3.0 wt%. For example, the nucleating agent may be at least one of a sodium salt of montanic acid and a long chain, linear carboxylic acid. For example, the nucleating agent may be Licomont Cav 102 from Clariant.

The polyoxymethylene composition includes the stabilizer of 0.5 wt% to 1.0 wt%, such as at least one of an antioxidant and an acid scavenger. For example, the stabilizer may be a mixture of IRGANOX 1010, IRGANOX 259 and IRGANOX 1098 from CIBA, MELAMINE, calcium stearate and PALMOWAX (specification EBS-SP).

The polyoxymethylene composition includes the anti-static agent of 0.5 wt% to 2.0 wt%. For example, the anti-static agent may be a glycerol monostearate.

In addition to being processed to form a ramp, the polyoxymethylene composition of the present invention may also be processed to form pellets. For example, the pellets may be hollow columns of 2mm by 3mm dimension. The pellets are advantageous for use in transportation or in storage. The pellets may be later processed to form ramps when needed.

Some examples are given here to demonstrate the steps to formulate and to form the micro-wear-resistant polyoxymethylene composition of the present invention.

### Example 1

Materials (A) polyoxymethylene copolymer (90.5 wt.%); (B) a lubricant of LDPE( melt flow rate 28 g/10min (ISO 1133)) (5.0 wt.%) ; an inorganic filler of (C-1) nano-grade calcium carbonate (1.0 wt.%) and (C-3) nano-grade silicon dioxide (1.0 wt.%); (D) a nucleating agent Licomont Cav 102 from Clariant (2.0 wt%) and (E) a stabilizer IRGANOX 1010, IRGANOX 259 and IRGANOX 1098 from CIBA, MELAMINE, calcium stearate and PALMOWAX (0.5 wt%) were well mixed in a high speed vertical mixer for 2 min. The mixed materials (5 KG) were placed in a raw material tank after mixing.

The mixed materials were fed into a twin screw extruders (ϕ=44 mm) by a feeder. The feeding was set to be 35kg/hr. The extruder barrel was adjusted to 160-220°C. The vacuum was adjusted to 10-30cm Hg. The melted composition were cooled and cut to be pellets in the form of 3mm* 2mm, then dried by a hot blow dryer at 130°C for 4 hours. The pellets were injected to form ramps of 0.17g, 11.6 x 6.2 x 5.2 mm each piece. The ramps were washed in an ultrasonic cleaner (first stage in a 1% surfactant VALTRON® DP97031, second to fifth stages in deionized water, 8 min in each stage). The wet ramps were dried in a cyclone type oven at 85°C for 8 min., then dried in a dry oven at 85°C for 1 hour. The ramps were subject to various tests. The results were listed in Table 2.

### Example 2

Methods which are similar to those of Example 1 were used except that (A) polyoxymethylene copolymer (91.0 wt.%); (B-1) a lubricant of a maleic anhydride modified polyolefin (7.0 wt.%); (C) an inorganic filler of potassium titanate powder(0.5 wt.%); (D) a nucleating agent Licomont Cav 102 from Clariant (1.0 wt%); and (E) a stabilizer IRGANOX 1010, IRGANOX 259 and IRGANOX 1098 from CIBA, MELAMINE, calcium stearate and PALMOWAX (0.5 wt%). The ramps were subject to various tests. The results were also listed in Table 2.

### Example 3

Methods which are similar to those of Example 1 were used except that (A) polyoxymethylene copolymer (91.0 wt.%); (B-2) a lubricant of UHMWPE (molecular weight 2 million (ASTM D4020) with average particle size 30 µm) (7.0 wt.% ); (C) an inorganic filler of potassium titanate powder (0.5 wt.%); (D) a nucleating agent Licomont Cav 102 from Clariant (1.0 wt%) and (E) a stabilizer IRGANOX 1010, IRGANOX 259 and IRGANOX 1098 from CIBA, MELAMINE, calcium stearate and PALMOWAX (0.5 wt%). The ramps were subject to various tests. The results were also listed in Table 2.

### Example 4

Methods which are similar to those of Example 1 were used except that (A) polyoxymethylene copolymer (92.5 wt.%); (B-1) a lubricant of a maleic anhydride modified polyolefin (5.0wt.%); (C-4) an inorganic filler of titanium dioxide powder (1.0 wt.%); (D) a nucleating agent Licomont Cav 102 from Clariant (1.0 wt%) and (E) a stabilizer IRGANOX 1010, IRGANOX 259 and IRGANOX 1098 from CIBA, MELAMINE, calcium stearate and PALMOWAX (0.5 wt%). The ramps were subject to various tests. The results were also listed in Table 2.

### Example 5

Methods which are similar to those of Example 1 were used except that (A) polyoxymethylene copolymer (91.5 wt.%); (B-1) a lubricant of a maleic anhydride modified polyolefin (5.0 wt.%); (C-2) an inorganic filler of nano-grade zinc oxide (1.0 wt.%); (D) a nucleating agent Licomont Cav 102 from Clariant (1.0 wt%) and (E) a stabilizer IRGANOX 1010, IRGANOX 259 and IRGANOX 1098 from CIBA, MELAMINE, calcium stearate and PALMOWAX (1.0 wt%) with additional (F) an anti-static agent glycerol monostearate of 1.0 wt%. The ramps were subject to various tests. The results were also listed in Table 2.

### Comparative Example 1

A raw material, polyoxymethylene resin pellets (Polyplastics-Duracon M9044) were dried at 100°C for 4 hrs. The pellets were injected to form ramps of 0.41g, 13.5 x 8.8 x 8.6 mm each piece. The ramps were washed in an ultrasonic cleaner (first stage in a 1% surfactant VALTRON® DP97031, second to fifth stages in deionized water, 8 min in each stage). The wet ramps were dried in a cyclone type oven at 85°C for 8 min., then dried in a dry oven at 85°C for 1 hour. The ramps were subject to various tests. The results were listed in Table 3.

### Comparative Example 2

A raw material, polyoxymethylene resin pellets (DuPont-Derlin 500P) were dried at 100°C for 4 hrs. The pellets were injected to form ramps of 0.17g, 11.6 x 6.2 x 5.2 mm each piece. The ramps were washed in an ultrasonic cleaner (first stage in a 1% surfactant VALTRON® DP97031, second to fifth stages in deionized water, 8 min. in each stage). The wet ramps were dried in a cyclone type oven at 85°C for 8 min., then dried in a dry oven at 85°C for 1 hour. The ramps were subject to various tests. The results were listed in Table 3.

**TABLE 1**

| Compositions of Ex-1 to Ex-5 | | | Ex-1 | Ex-2 | Ex-3 | Ex-4 | Ex-5 |
|---|---|---|---|---|---|---|---|
| ingredients | A. Polyoxymethylene | copolymer | 90.5 | 91 | 91 | 92.5 | 91.5 |
| | B. Lubricant (2) * | LDPE | 5 | - | - | - | - |
| | B-1 | Modified PE (polyolefin) | - | 7 | - | 5 | 5 |
| | B-2 | UHMWPE | - | - | 7 | - | - |
| | C. Inorganic filler | Potassium Titanate powder | - | 0.5 | 0.5 | - | - |
| | C-1 | CaCO₃ | 1 | - | - | - | - |
| | C-2 | Nano ZnO | - | - | - | - | 1 |
| | C-3 | Nano SiO₂ | 1 | - | - | - | - |
| | C-4 | TiO2 powder | - | - | - | 1 | - |
| | D. Nucleating agent | Licomont Cav 102 | 2 | 1 | 1 | 1 | 1 |
| | E. Stabilizers | (1) * | 0.5 | 0.5 | 0.5 | 0.5 | 0.5 |
| | F. Anti-static agent | glycerol monostearate | - | - | - | - | 1 |
| | Physical | Melt flow rate (ISO 1133) | 27 | 24 | 25 | 26.2 | 24.7 |
| Results | properties | Tensile strength (ISO 527-1,2) | 60 | 59 | 52 | 59 | 58.2 |
| | | Tensile elongation (ISO 527-1,2) | 23 | 25 | 18 | 24 | 26.4 |
| | | Flexural strength (ISO 178) | 88 | 82 | 75 | 82 | 80 |
| | | Charpy Impact (ISO 179/1eA) | 6 | 8 | 6 | 8 | 9.1 |

| | | | | | | | |
|---|---|---|---|---|---|---|---|
| Remark: (1) * mixture of IRGANOX 1010, IRGANOX 259 and IRGANOX 1098 from CIBA, MELAMINE, calcium stearate and PALMOWAX (specification EBS-SP). (2)* The ingredient (B) is a lubricant, which may be a LDPE, a modified PE, or a UHMWPE. The ingredient (C) is an inorganic filler, which may be a potassium titanate powder, CaCO₃, nano ZnO, Nano SiO₂, or TiO₂ powder. | | | | | | | |

The following test results are carried out under a condition of after being reciprocated 600,000 times:
(1) at a load of 2.5 g;
(2) at a speed of 8 inch/sec;
(3) under an environmental low humidity or high humidity; and
(4) under an environmental low temperature, room temperature or high temperature.

**TABLE 2**

| | Example 1 (A) | Example 2 (A) | Example 3 (A) | Example 4 (A) |
|---|---|---|---|---|
| Condition | 5°C±2°C | 5°C±2°C | 5°C±2°C | 5°C±2°C |
| | 15%±3% RH | 15%±3% RH | 15%±3% RH | 15%±3% RH |
| Maximum wear depth | 0.3890 | 0.3301 | 0.2474 | 0.2292 |
| | 0.4466 | 0.3279 | 0.3446 | 0.2844 |
| | 0.9180 | 0.4028 | 0.1547 | 0.5014 |
| | 0.3702 | 0.3473 | 0.0785 | 0.2244 |
| Wear Area | 4.4868 | 9.2383 | 1.7316 | 1.4760 |
| | 3.9027 | 7.1192 | 8.2014 | 1.5837 |
| | 5.7947 | 5.2397 | 1.1880 | 6.4781 |
| | 6.3641 | 7.4159 | 0.8134 | 9.6901 |

| | | | | |
|---|---|---|---|---|
| Remarks: 1. (A) low humidity/low temperature; (B) high humidity/high temperature; (C) room temperature. 2.The data was measured by Wyko (MHT-III) machine (Different brands machine might have different test results). 3.The parts were tested by CETR Micro-Tribometer UMT (Load/Unload model) with suspension component. | | | | |

Example 1 demonstrates a primary evaluation of the polyoxymethylene composition of the present invention. Example 2-4 are further modified and improved in accordance with Example 1. Example 5 demonstrates excellent micro-wear-resistant properties in comparison to the comparative examples. Example 5 exhibits excellent micro-wear-resistant properties in both: (A) low humidity/low temperature condition, (B) high humidity/high temperature condition and (C) room temperature. Example 5 also generates least wear debris to show excellent micro-wear-resistant properties in (A) low humidity/low temperature condition, (B) high humidity/high temperature condition and (C) room temperature.

**TABLE 2 (Continued)**

| | Example 5 | | | |
|---|---|---|---|---|
| Condition | (A) | (A) | (C) | (B) |
| | 5°C±2°C | 10°C±2°C | 25°C±3°C | 55°C±5°C |
| | 15%±3% RH | 15%±3% RH | 55%±5% RH | 55%±5% RH |
| Maximum wear depth | 0.0888 | 0.1740 | 0.0573 | 0.0735 |
| | 0.0915 | 0.2216 | 0.2277 | 0.1274 |
| | 0.1752 | 0.2181 | 0.0820 | 0.2216 |
| | 0.2100 | 0.1137 | 0.1091 | 0.2291 |
| Wear Area | 1.5791 | 3.9492 | 0.4437 | 0.8667 |
| | 1.4484 | 3.4538 | 1.8543 | 1.7613 |
| | 2.0638 | 2.5785 | 1.6032 | 1.8775 |
| | 3.2159 | 2.2625 | 0.4718 | 2.0090 |

| | | | | |
|---|---|---|---|---|
| Remarks: 1. (A) low humidity/low temperature; (B) high humidity/high temperature; (C) room temperature. 2.The data was measured by Wyko (MHT-III) machine (Different brands machine might have different test results).3.The parts were tested by CETR Micro-Tribometer UMT (Load/Unload model) with suspension component. | | | | |

**TABLE 3**

| | Comparative Example 1 | | |
|---|---|---|---|
| Condition | (A) | (C) | (B) |
| | 5°C±2°C | 25°C±3°C | 55°C±5°C |
| | 15%±3% RH | 55%±5% RH | 55%±5% RH |
| Maximum wear depth | 1.8854 | 0.3795 | 0.2768 |
| | 2.2465 | 0.3597 | 0.4282 |
| | 1.8726 | 0.2569 | 0.4215 |
| | 1.8947 | 0.4435 | 0.6491 |
| Wear Area | 181.2939 | 13.1565 | 4.7282 |
| | 172.5484 | 9.1015 | 17.1287 |
| | 161.4402 | 7.2146 | 7.8671 |
| | 180.5232 | 8.5611 | 19.7332 |

**TABLE 3 (continued)**

| | Comparative Example 2 | | | |
|---|---|---|---|---|
| Condition | (A) | (A) | (C) | (B) |
| | 5°C±2°C | 10°C±2°C | 25°C±3°C | 55°C±5°C |
| | 15%±3% RH | 15%±3% RH | 55%±5% RH | 55%±5% RH |
| Maximum wear depth | 2.5730 | 2.5730 | 0.7733 | 0.3698 |
| | 2.0564 | 1.6634 | 1.0455 | 0.5261 |
| | 1.8703 | 2.1453 | 1.5200 | 0.6344 |
| | 2.1701 | 1.4446 | 1.1794 | 0.8624 |
| Wear Area | 99.8968 | 99.8968 | 15.3849 | 9.0576 |
| | 76.3102 | 98.7693 | 24.8515 | 12.0457 |
| | 60.1881 | 85.8774 | 42.3004 | 12.4023 |
| | 85.8774 | 86.7332 | 29.6912 | 14.6838 |

| | | | | |
|---|---|---|---|---|
| Remarks: 1. (A) low humidity/low temperature; (B) high humidity/high temperature; (C) room temperature. 2.The data was measured by Wyko (MHT-III) machine (Different brands machine might have different test results). 3. The parts were tested by CETR Micro-Tribometer UMT (Load/Unload model) with suspension component. | | | | |

## Claims

1. A polyoxymethylene composition, which has at least one of the micro-wear loss of less than 1µm maximum wear depth or less than 10µm² wear area under a condition of a load of 2.5 g after being reciprocated 600,000 times at a speed of 8 inch/second and an environmental humidity of 13% to 17%RH and an environmental temperature of 3°C to 10°C, and has at least one of the micro-wear loss of less than 0.5µm maximum wear depth and of less than 5µm² wear area under a condition of a load of 2.5 g after being reciprocated 600,000 times at a speed of 8 inch/sec and an environmental humidity of 50% to 60%RH and an environmental temperature of 22°C to 60°C, the polyoxymethylene composition
**characterized by**:
a polyoxymethylene copolymer of 90.5 wt% to 92.5 wt% including 3.3 wt% of 1,3-dioxolane as a comonomer;
an inorganic filler of 0.5 wt% to 3.0 wt%;
a lubricant of 3.0 wt% to 10.0 wt%;
- a nucleating-agent of 1.0 wt% to 3.0 wt%;-
a stabilizer of 0.5 wt% to 1.0 wt%; and
an anti-static agent of 0.5 wt% to 2.0 wt%.

2. The polyoxymethylene composition of claim 1, **characterized in that** said lubricant is a modified polyolefin.

3. The polyoxymethylene composition of claim 2, **characterized in that** the modified polyolefin comprises a maleic anhydride modified polyolefin.

4. The polyoxymethylene composition of claim 1, **characterized in that** said inorganic filler comprises nano-grade zinc oxide particles with an average particle size not greater than 100 nm.

5. The polyoxymethylene composition of claim 1, **characterized in that** the nucleating agent comprises at least one of a sodium salt of montanic acid and a long chain, linear carboxylic acid.

6. The polyoxymethylene composition of claim 1, **characterized in that** the stabilizer comprises at least one of an antioxidant and an acid scavenger.

7. The polyoxymethylene composition of claim 1, **characterized in that** the anti-static agent comprises a glycerol monostearate.

8. The polyoxymethylene composition of claim 1 further **characterized by** an ultra high molecular weight polyethylene having a molecular weight of 2 million with an average particle size of 30 µm in a range of 3 wt% to 10 wt%.

9. The polyoxymethylene composition of claim 1 further **characterized by**:
potassium titanate powder having an average particle size of 1.5 µm in a range of 0.5 wt% to 1.0 wt%.

10. The polyoxymethylene composition of claim 1 further **characterized by**:
calcium carbonate having a volume average particle diameter of 1 µm in a range of 0.5 wt% to 2.0 wt%.

11. The polyoxymethylene composition of claim 1 further **characterized by**:
nano-grade silicon dioxide with an average particle size of 20 nm in a range of 0.5 wt% to 2 wt%.

12. The polyoxymethylene composition of claim 1 further **characterized by**:
titanium dioxide with an average particle size of 1 µm in a range of 0.5 wt% to 2 wt%.

13. The polyoxymethylene composition of claim 1 further **characterized by**:
a low density polyethylene of (5%) with a melt flow rate 28 g/10min.

14. A ramp made of a polyoxymethylene composition which has at least one of the micro-wear loss of less than 1 µm maximum wear depth and of less than 10 µm² wear area under a condition of a load of 2.5 g after being reciprocated 600, 000 times at a speed of 8 inch/sec and an environmental humidity of 13% to 17%RH) and an environmental temperature of 3°C to 10°C, and has at least one of the micro-wear loss of less than 0.5µm maximum wear depth and of less than 5µm² wear area under a condition of a load of 2.5 g after being reciprocated 600,000 times at a speed of 8 inch/sec and an environmental humidity of 50%-60%RH and an environmental temperature of 22°C to 60°C, the ramp **characterized by**:
a polyoxymethylene copolymer of 90.5 wt% to 92.5 wt% including 3.3 wt% of 1,3-dioxolane as a comonomer;
an inorganic filler of 1.0 wt% to 3.0 wt%;
a lubricant of 3.0 wt% to 10.0 wt%;
a nucleating agent of 1.0 wt% to 3.0 wt%;
a stabilizer of 0.5 wt% to 1.0 wt%; and
an anti-static agent of 0.5 wt% to 2.0 wt%.

## Patentansprüche

1. Polyoxymethylenzusammensetzung, die mindestens eines der Mikroabnutzung von weniger als 1 µm maximaler Abnutzungstiefe oder von weniger als 10 µm² Abnutzungsfläche unter einer Bedingung einer Belastung von 2,5 g nach einer 600.000 fachen Hin- und Herbewegung bei einer Geschwindigkeit von 8 Inch/Sekunde und einer Umgebungsfeuchte von 13% bis 17% relativer Feuchtigkeit (RH) und einer Umgebungstemperatur von 3 °C bis 10 °C aufweist, und mindestens eines der Mikroabnutzung von weniger als 0,5 µm maximaler Abnutzungstiefe und von weniger als 5 µm² Abnutzungsfläche unter einer Bedingung einer Belastung von 2,5 g nach einer 600,000 fachen Hin- und Herbewegung bei einer Geschwindigkeit von 8 Inch/Sek. und einer Umgebungsfeuchte von 50% bis 60% relativer Feuchtigkeit (RH) und einer Umgebungstemperatur von 22°C bis 60°C aufweist, worin die Polyoxymethylenzusammensetzung **gekennzeichnet ist durch**:
90,5 Gew.-% bis 92,5 Gew.-% eines Polyoxymethylencopolymers, einschließlich 3,3 Gew.-% 1,3-Dioxolan als ein Comonomer;
0,5 Gew.-% bis 3,0 Gew.-% eines anorganischen Füllstoffs;
3,0 Gew.-% bis 10,0 Gew.-% eines Schmiermittels;
1,0 Gew.-% bis 3,0 Gew.-% eines Nukleierungsmittels;
0,5 Gew.-% bis 1,0 Gew.-% eines Stabilisators; und
0,5 Gew.-% bis 2,0 Gew.-% eines Antistatikzusatzes.

2. Polyoxymethylenzusammensetzung nach Anspruch 1, **dadurch gekennzeichnet, dass** das Schmiermittel ein modifiziertes Polyolefin ist.

3. Polyoxymethylenzusammensetzung nach Anspruch 2, **dadurch gekennzeichnet, dass** das modifizierte Polyolefin ein mit Maleinesäureanhydrid modifiziertes Polyolefin umfasst.

4. Polyoxymethylenzusammensetzung nach Anspruch 1, **dadurch gekennzeichnet, dass** der anorganische Füllstoff Zinkoxidteilchen von Nano-Güte mit einer durchschnittlichen Teilchengröße von nicht mehr als 100 nm umfasst.

5. Polyoxymethylenzusammensetzung nach Anspruch 1, **dadurch gekennzeichnet, dass** das Nukleierungsmittel mindestens eines eines Natriumsalzes der Montansäure und einer langkettigen, linearen Carbonsäure umfasst.

6. Polyoxymethylenzusammensetzung nach Anspruch 1, **dadurch gekennzeichnet, dass** der Stabilisator mindestens eines eines Antioxidants und eines Säurefängers umfasst.

7. Polyoxymethylenzusammensetzung nach Anspruch 1, **dadurch gekennzeichnet, dass** der Antistatikzusatz ein Glycerolmonostearat umfasst.

8. Polyoxymethylenzusammensetzung nach Anspruch 1, das ferner **gekennzeichnet ist durch** ein Polyethylen mit ultrahohem Molekulargewicht mit einem Molekulargewicht von 2 Millionen mit einer durchschnittlichen Teilchengröße von 30 µm in einem Bereich von 3 Gew.-% bis 10 Gew.-%.

9. Polyoxymethylenzusammensetzung nach Anspruch 1, das ferner **gekennzeichnet ist durch**: Kaliumtitanatpulver mit einer durchschnittlichen Teilchengröße von 1,5 µm in einem Bereich von 0,5 Gew.-% bis 1,0 Gew.-%.

10. Polyoxymethylenzusammensetzung nach Anspruch 1, das ferner **gekennzeichnet ist durch**: Calciumcarbonat mit einem volumenbasierenden durchschnittlichen Teilchendurchmesser von 1 µm in einem Bereich von 0,5 Gew.-% bis 2,0 Gew.-%.

11. Polyoxymethylenzusammensetzung nach Anspruch 1, das ferner **gekennzeichnet ist durch**: Siliziumdioxid von Nano-Güte mit einer durchschnittlichen Teilchengröße vom 20 nm in einem Bereich von 0,5 Gew.-% bis 2 Gew.-%.

12. Polyoxymethylenzusammensetzung nach Anspruch 1, das ferner **gekennzeichnet ist durch**: Titandioxid mit einer durchschnittlichen Teilchengröße von 1 µm in einem Bereich von 0.5 Gew.-% bis 2 Gew.-%.

13. Polyoxymethylenzusammensetzung nach Anspruch 1, das ferner **gekennzeichnet ist durch**: eines Polyethylens geringer Dichte von (5%) mit einer Schmelzfließfähigkeit von 28 g/10 Min.

14. Rampe hergestellt aus einer Polyoxymethylenzusammensetzung, die mindestens eines der Mikroabnutzung von weniger als 1 µm maximaler Abnutzungstiefe oder von weniger als 10 µm² Abnutzungsfläche unter einer Bedingung einer Belastung von 2,5 g nach einer 600.000 fachen Hin- und Herbewegung bei einer Geschwindigkeit von 8 Inch/Sekunde und einer Umgebungsfeuchte von 13% bis 17% relativer Feuchtigkeit (RH) und einer Umgebungstemperatur von 3°C bis 10°C aufweist, und mindestens eines der Mikroabnutzung von weniger als 0,5 µm maximaler Abnutzungstiefe und von weniger als 5 µm² Abnutzungsfläche unter einer Bedingung einer Belastung von 2,5 g nach einer 600,000 fachen Hin- und Herbewegung bei einer Geschwindigkeit von 8 Inch/Sek. und einer Umgebungsfeuchte von 50% bis 60% relativer Feuchtigkeit (RH) und einer Umgebungstemperatur von 22°C bis 60°C aufweist, worin die Rampe **gekennzeichnet ist durch**:
90,5 Gew.-% bis 92,5 Gew.-% eines Polyoxymethylencopolymers, einschließlich 3,3 Gew.-% 1,3-Dioxolan als ein Comonomer;
0,5 Gew.-% bis 3,0 Gew.-% eines anorganischen Füllstoffs;
3,0 Gew.-% bis 10,0 Gew.-% eines Schmiermittels;
1,0 Gew.-% bis 3,0 Gew.-% eines Nukleierungsmittels;
0,5 Gew.-% bis 1,0 Gew.-% eines Stabilisators; und
0,5 Gew.-% bis 2,0 Gew.-% eines Antistatikzusatzes.

## Revendications

1. Une composition de polyoxyméthylène qui présente au moins une de perte de micro usure de profondeur d'usure maximale inférieure à 1 µm ou de zone d'usure inférieure à 10 µm² dans une condition de charge de 2,5 g après avoir subi 600.000 fois un mouvement alternatif à une vitesse de 8 pouces / seconde et avec un taux d'humidité ambiante de 13% à 17% d'humidité relative et une température ambiante de 3° C à 10° C, et qui présente moins une de perte de micro-usure inférieure à 0,5 µm de profondeur d'usure maximale et de zone d'usure inférieure à 5 µm² sous une condition de charge de 2,5 g après avoir subi 600.000 fois un mouvement alternatif à une vitesse de 8 pouces / seconde et avec un taux humidité ambiante de 50% à 60% d'humidité relative et une température ambiante de 22° C à 60° C, la composition de polyoxyméthylène étant **caractérisée par**:
un copolymère de polyoxyméthylène de 90,5% en poids à 92,5% en poids, comprenant 3,3% en poids de 1,3-dioxolane en tant que comonomère;
une charge inorganique de 0,5% en poids à 3,0% en poids;
un lubrifiant de 3,0% en poids à 10,0% en poids;
un agent de nucléation de 1,0% en poids à 3,0% en poids;
un stabilisant de 0,5% en poids à 1,0% en poids ; et
un agent antistatique de 0,5% en poids à 2,0% en poids.

2. La composition de polyoxyméthylène de la revendication 1, **caractérisée en ce que** ledit lubrifiant est une polyoléfine modifiée.

3. La composition de polyoxyméthylène de la revendication 2, **caractérisée en ce que** la polyoléfine modifiée comprend une polyoléfine modifiée par l'anhydride maléique.

4. La composition de polyoxyméthylène de la revendication 1, **caractérisée en ce que** ladite charge inorganique comprend des particules d'oxyde de zinc nano-grade avec une taille moyenne de particule non supérieure à 100 nm.

5. La composition de polyoxyméthylène de la revendication 1, **caractérisée en ce que** l'agent de nucléation comprend au moins un d'un sel de sodium de l'acide montanique et d'un acide carboxylique linéaire à longue chaîne.

6. La composition de polyoxyméthylène de la revendication 1, **caractérisée en ce que** le stabilisant comprend au moins un d'un antioxydant et d'un fixateur d'acide.

7. La composition de polyoxyméthylène de la revendication 1, **caractérisée en ce que** l'agent antistatique comprend un mono-stéarate de glycérol.

8. La composition de polyoxyméthylène de la revendication 1, **caractérisée en outre par** un polyéthylène de poids moléculaire ultra élevé ayant un poids moléculaire de 2 millions avec une taille moyenne de particule de 30 µm dans une plage de 3% en poids à 10% en poids.

9. La composition de polyoxyméthylène de la revendication 1, **caractérisée en outre par** de la poudre de titanate de potassium ayant une taille moyenne de particule de 1,5 µm dans une plage de 0,5% en poids à 1,0% en poids.

10. La composition de polyoxyméthylène de la revendication 1, **caractérisée en outre par**: du carbonate de calcium ayant un diamètre de particule moyen en volume de 1 µm dans une plage de 0,5% en poids à 2,0% en poids.

11. La composition de polyoxyméthylène de la revendication 1, **caractérisée en outre par**: du dioxyde de silicium nano-grade avec une taille moyenne de particule de 20 nm dans une gamme de 0,5% en poids à 2% en poids.

12. La composition de polyoxyméthylène de la revendication 1, **caractérisée en outre par**: du dioxyde de titane ayant une taille moyenne de particules de 1 µm dans une plage de 0,5% en poids à 2% en poids.

13. La composition de polyoxyméthylène de la revendication 1, **caractérisée en outre par**: un polyéthylène basse densité de (5%) avec un taux de fluidité de 28 g/10 min.

14. Une rampe constituée d'une une composition de polyoxyméthylène qui présente au moins une de : perte de micro-usure de profondeur d'usure maximale inférieure à 1 µm ou de zone d'usure inférieure à 10 µm² dans une condition de charge de 2,5 g après avoir subi 600.000 fois un mouvement alternatif à une vitesse de 8 pouces / seconde et avec un taux d'humidité ambiante de 13% à 17% d'humidité relative et une température ambiante de 3° C à 10° C, et qui présente moins une de : perte de micro usure inférieure à 0,5 µm de profondeur d'usure maximale et de zone d'usure inférieure à 5 µm² sous une condition de charge de 2,5 g après avoir subi 600.000 fois un mouvement alternatif à une vitesse de 8 pouces / seconde et avec un taux humidité ambiante de 50% à 60% et une température ambiante de 22° C à 60° C, la composition de polyoxyméthylène, étant **caractérisée par**:
un copolymère de polyoxyméthylène de 90,5% en poids à 92,5% en poids, comprenant 3,3% en poids de 1,3-dioxolane en tant que comonomère;
une charge inorganique de 0,5% en poids à 3,0% en poids;
un lubrifiant de 3,0% en poids à 10,0% en poids;
un agent de nucléation de 1,0% en poids à 3,0% en poids;
un stabilisant de 0,5% en poids à 1,0% en poids ; et
un agent antistatique de 0,5% en poids à 2,0% en poids.
